# EUROPEAN PATENT SPECIFICATION

(11) **EP 3 812 070 B1**
(45) Date of publication and mention of the grant of the patent: **15.04.2026**
(21) Application number: 19823644.0
(22) Date of filing: 11.06.2019
(51) Int. Cl.: B23C 5/10

(54) **END MILL**
SCHAFTFRÄSER
FRAISE À QUEUE À RAINURER

(30) Priority: 21.06.2018 JP 2018118324
(43) Date of publication of application: 28.04.2021
(73) Proprietor: Moldino Tool Engineering, Ltd., Sumida-ku Tokyo 1300026 (JP)
(72) Inventor: BABA, Makoto, Yasu-shi, Shiga 520-2323 (JP); HIROSE, Ryou, Yasu-shi, Shiga 520-2323 (JP); TOKUYAMA, Akira, Yasu-shi, Shiga 520-2323 (JP)
(74) Representative: Hoffmann Eitle
(86) International application number: PCT/JP2019/023085
(87) International publication number: WO 2019/244711

(56) References cited:
- EP-A1- 2 913 132
- WO-A1-2016/136820
- GB-A- 2 354 728
- JP-A- 2012 200 836
- JP-A- 2015 080 844
- JP-A- H07 204 921
- JP-A- H11 156 621
- JP-A- H11 156 621
- US-A- 4 968 195

## Description

### [Technical Field]

The present invention relates to an end mill.

### [Background Art]

For example, as an end mill used for cutting a die or the like by a triaxial machining device, in general, a ball end mill as described in JP H05-337718 A is known. In ball end mill, in general, multiple chip discharge flutes are formed on an outer periphery of a leading end portion of a shaft-shaped end mill main body which is rotated around an axis so as to extend from a leading end to a trailing end side of the end mill main body at intervals in a circumferential direction.

A cutting edge is formed on an outer peripheral ridge portion of a wall surface of the chip discharge flute facing an end mill rotation direction. The cutting edge includes an end cutting edge having a hemispherical shape in which a rotation locus around the axis has a center on the axis, on a leading end portion in an axial direction. The cutting edge includes a peripheral cutting edge which is continuous with the end cutting edge and has a cylindrical surface shape in which a rotation locus around the axis has the axis as a center, on a trailing end portion in the axial direction.

WO 2016/136820 A1 refers to radius end mill, which comprises a ceramic end mill main body, chip discharge grooves formed in an outer periphery of the end mill main body, outer peripheral cutting edges formed at intersecting ridge lines between wall surfaces which face in a tool rotation direction, in the chip discharge grooves, and an outer peripheral surface of the end mill main body.[Summary of Invention]

### [Technical Problem]

When a ball end mill is used to cut a vertical wall of a die or the like having a small inclination angle with respect to an axis of an end mill main body by a triaxial machining device, the end mill main body is fed in a direction perpendicular to the axis to perform contouring. In the contouring, the vertical wall is cut by a trailing end-side portion of an end cutting edge having a hemispherical rotation locus. The cutting by the contouring is repeated in a stepwise manner by moving the end mill main body in an axial direction at a predetermined pitch so that cutting surfaces overlap each other, and thus, the vertical wall is formed.

If a tool diameter which is a maximum outer diameter of a cutting edge, that is, a diameter of a hemisphere formed by a rotation locus of the end cutting edge is small, when the pitch increases, a boundary portion between the overlapping cutting surfaces protrudes. As a result, machined surface roughness is impaired. Therefore, there is no choice but to reduce the pitch in a vertical direction, and thus, machining efficiency is impaired. In a ball end mill having a large tool diameter, an end mill main body thereof also increases. Accordingly, a rotational driving force should be increased, and thus, a cost increases.

An object of the present invention provides an end mill capable of increasing machining efficiency by increasing a movement pitch in an axial direction when cutting a vertical wall of a work material, as compared with a ball end mill having the same tool diameter.

### [Solution to Problem]

According to the present invention, an end mill comprising the features of claim 1 is provided.

In the end mill having the configuration, the cross section along the axis of the rotation locus of the peripheral cutting edge around the axis has a convex curved shape which protrudes toward the outer peripheral side of the end mill main body, and the curvature radius of the convex curve is larger than 1/2 of the outer diameter of the cutting edge which is the maximum diameter of the cutting edge. Therefore, compared to an end cutting edge in which a curvature radius (radius) is 1/2 of an outer diameter of a cutting edge like the end cutting edge of a ball end mill having a hemispherical rotation locus, if the outer diameters of the cutting edges are the same each other, it is possible to prevent a boundary portion between cutting surfaces from largely protruding even when a movement pitch increases during cutting of a vertical wall.

In the end mill having the above configuration, the helix angle of the peripheral cutting edge is 40 degree or more, and the radial rake angle of the peripheral cutting edge is 0 degree or less. Accordingly, the peripheral cutting edge can have a high sharpness while securing edge strength, and thus, a cutting load can be reduced. Therefore, it is possible to obtain good machined surface roughness even when the end mill main body is moved at a large movement pitch in the axial direction without increasing a size of the end mill main body. According to the end mill, the vertical wall of the work material can be cut efficiently and with high quality.

As mentioned, the helix angle of the peripheral cutting edge is 40 degree or more. According to this configuration, the peripheral cutting edge has higher sharpness, the cutting resistance can be further reduced, and the machined surface roughness can be improved. The helix angle of the peripheral cutting edge may be 40 degree or more and 60 degree or less, or 40 degree or more and 50 degree or less.

However, if the curvature radius of the convex curve formed by the rotation locus of the peripheral cutting edge of the end mill is too large, the peripheral cutting edge bites the work material over a wide range in the axial direction, and thus, a cutting resistance increases. If the cutting resistance is large, chatter vibrations are generated, and thus, machined surface roughness may be impaired. Therefore, the curvature radius of the convex curve formed by the rotation locus of the peripheral cutting edge is set to 3 times or less the outer diameter of the cutting edge. Further, even if the radial rake angle of the peripheral cutting edge becomes too small, the cutting resistance similarly increases. Accordingly, the radial rake angle of the peripheral cutting edge is set to -20 degree or more.

The radial rake angle of the peripheral cutting edge may be -10 degree or more and -3 degree or less. According to this configuration, the cutting resistance can be further reduced and the edge strength of the peripheral cutting edge can be secured.

The convex curve formed by the cross section of the rotation locus of the peripheral cutting edge may gradually extend toward the inner peripheral side as the convex curve extends toward the leading end side of the end mill main body. According to this configuration, in a triaxial machining device, the end mill main body is moved along the inclination of the vertical wall of the work material toward the leading end side in the axial direction at a predetermined pitch, and thus, it is possible to perform the cutting without interference between the end mill main body and the vertical wall.

The core thickness of the end mill main body in the cross section orthogonal to the axis of the portion where the peripheral cutting edge is formed may be 70% or more and 85% or less of the diameter of the peripheral cutting edge in the same cross section. According to this configuration, a sufficient size can be secured in the chip discharge flute, and improved chip discharging properties can be obtained. Rigidity of the end mill main body increases in the portion where the peripheral cutting edge is formed. Accordingly, it is possible to prevent the chatter vibrations caused by the cutting resistance or bending of the end mill main body. Therefore, according to the end mill, the machined surface roughness can be further improved.

The length of the peripheral cutting edge in the axial direction may be within a range of 0.75 times or more and 2 times or less the outer diameter. According to this configuration, while a machining width of the vertical wall in once contouring is sufficiently secured, even when a bottom surface horizontal to the work material or an inclined surface having a gentler inclination than the vertical wall is formed following the vertical wall, it is possible to perform the cutting to a position very close to the bottom surface or the inclined surface by the triaxial machining device.

The cutting edge may further include an end cutting edge in which the cross section along the axis of the rotation locus around the axis has a center on the axis and which forms a convex curved shape being in contact with a leading end of the convex curve formed by the cross section of the rotation locus of the peripheral cutting edge, on the leading end portion of the end mill main body. In this case, for example, when the horizontal bottom surface is formed following the vertical wall as described above, it is possible to perform cutting of a corner portion between the vertical wall and the bottom surface using the end cutting edge by the triaxial machining device.

When the convex curved end cutting edge is formed on the leading end portion of the end mill main body, it is desirable that the curvature radius of the convex curve formed by the cross section of the rotation locus of the peripheral cutting edge is within a range of 5 times or more and 20 times or less a curvature radius of a convex curve formed by the cross section of the rotation locus of the end cutting edge. If the curvature radius of the peripheral cutting edge is larger than this range, the curvature radius of the end cutting edge is too small, and there is a concern that the end cutting edge is damaged. If the curvature radius of the peripheral cutting edge is smaller than this range, the curvature radii of the end cutting edge and the peripheral cutting edge are substantially the same as each other, it is no different from cutting with a ball end mill.

### [Advantageous Effects of Invention]

As described above, according to the end mill of the present invention, it is possible to increase the movement pitch in the axial direction and improve the machining efficiency, as compared with a ball end mill having the same tool diameter. According to the end mill of the present invention, even when the vertical wall of the work material is cut by the triaxial machining device, it is possible to improve the machining efficiency and obtain good machined surface roughness.

### [Brief Description of Drawings]

Fig. 1 is a side view of a leading end portion of an end mill main body illustrating an embodiment of the present invention.
Fig. 2 is an enlarged side view of a further leading end portion of the embodiment illustrated in Fig. 1.
Fig. 3 is an enlarged front view when a center portion of the embodiment illustrated in Fig. 1 is viewed from a leading end side in an axial direction.
Fig. 4 is a cross-sectional view (a cross-sectional view at a position of 5 mm from a leading end toward a trailing end side of the end mill main body in the axial direction) taken along line Z-Z in Fig. 1.

### [Description of embodiments]

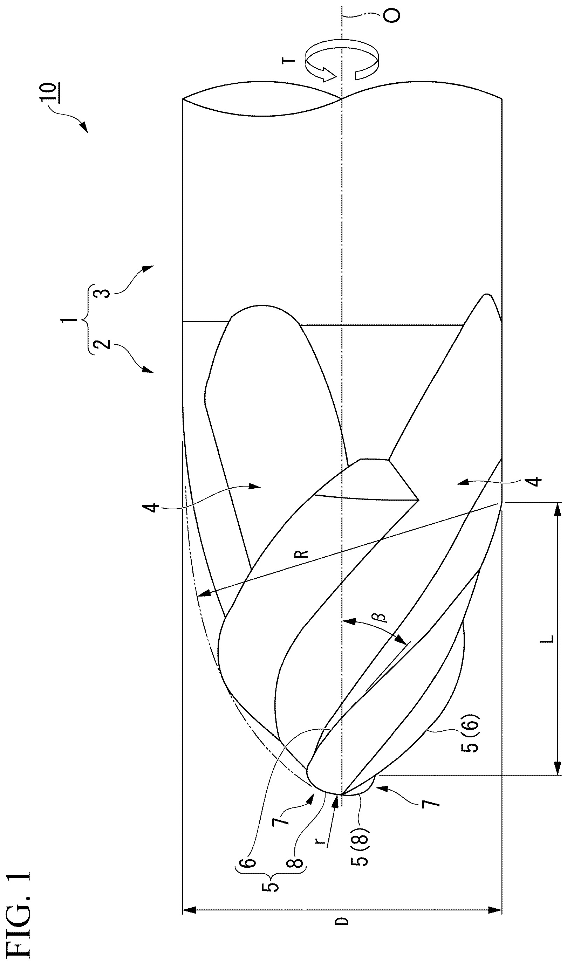

Fig. 1 to 4 illustrate an end mill according to an embodiment of the present invention.

An end mill 10 of the present embodiment includes an end mill main body 1 and a hard coating (not illustrated) formed on a surface of the end mill main body 1. The end mill 10 may not have the hard coating.

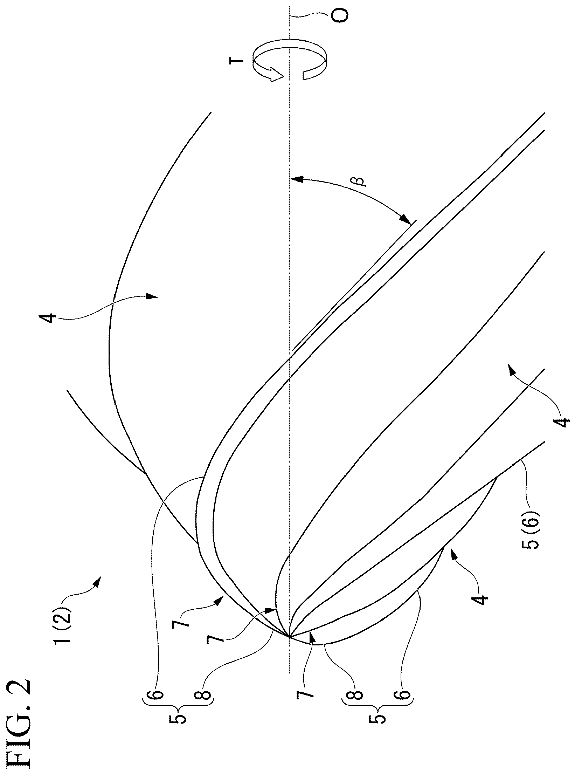

In the present embodiment, for example, the end mill main body 1 is integrally formed of a hard metal material such as cemented carbide or high-speed tool steel and has a substantially columnar shaft shape with an axis O as a center. A blade portion 2 is formed at a leading end portion (left side in Figs. 1 and 2) of the end mill main body 1. A trailing end portion (right side in Fig. 1) other than the blade portion 2 is a shank portion 3 which is still in a columnar shape.

For example, the end mill 10 of the present embodiment is a cutting tool (rotating tool), in which the shank portion 3 is held by a main shaft of a machine tool such as a machining center which is a triaxial machining device and is normally fed in a direction perpendicular to the axis O while being rotated around the axis O in an end mill rotation direction T, and thus, the blade portion 2 perform cutting (rotating machining) such as finishing machining or semi-finishing machining on a work material with a relatively small amount of cutting. For example, the end mill 10 of the present embodiment performs various kinds of cutting such as concave curved surface machining, convex curved surface machining, pocket machining, deep drilling, and chamfering on a work material such as a die formed of a metal material.

The blade portion 2 includes a chip discharge flute 4 which is formed to extend from a leading end toward a trailing end side of the blade portion 2. In the present embodiment, a plurality (four) of chip discharge flutes 4 are formed at intervals in a circumferential direction. The chip discharge flutes 4 are twisted so as to face a side opposite to the end mill rotation direction T toward a trailing end side of the end mill main body 1.

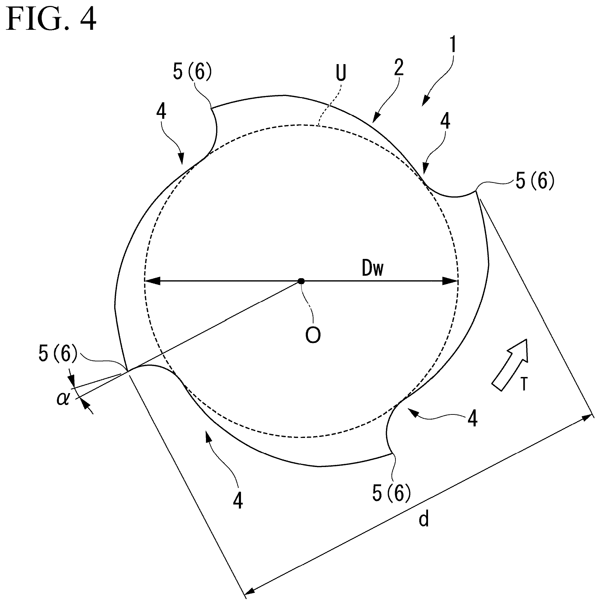

As illustrated in Fig. 4, a wall surface of the chip discharge flute 4 facing the end mill rotation direction T extends so as to face the side opposite to the end mill rotation direction T toward an outer peripheral side. Peripheral cutting edges 6 are formed as cutting edges 5 on outer peripheral ridge portions of the wall surfaces of the chip discharge flutes 4 at equal intervals in the circumferential direction. That is, the end mill 10 of the present embodiment is a four-edge solid end mill. The peripheral cutting edges 6 may be formed at unequal intervals in the circumferential direction.

The wall surface of the chip discharge flute 4 facing the end mill rotation direction T is a rake face of the peripheral cutting edge 6. An outer peripheral surface of the blade portion 2 which intersects the rake face via the peripheral cutting edge 6 is a flank of the peripheral cutting edge 6. In the present embodiment, the peripheral cutting edge 6 has a negative radial rake angle α and a positive helix angle β. Moreover, the plurality of (four) peripheral cutting edges 6 which are respectively formed in the plurality of chip discharge flutes 4 have rotation loci which coincide with each other around the axis O.

A groove-shaped gash 7 extending toward the inner peripheral side of the blade portion 2 is formed at a leading end portion of the chip discharge flute 4. An end cutting edge 8 continuous to a leading end of each peripheral cutting edge 6 is formed as the cutting edge 5 at a ridge portion extending from a leading end of a wall surface of the gash 7 facing the end mill rotation direction T to the outer peripheral side. A wall surface of the gash 7 facing the end mill rotation direction T is a rake face of the end cutting edge 8. A leading end surface of the blade portion 2 which is continuous with the rake face of the end cutting edge 8 via the end cutting edge 8 is a flank of the end cutting edge 8.

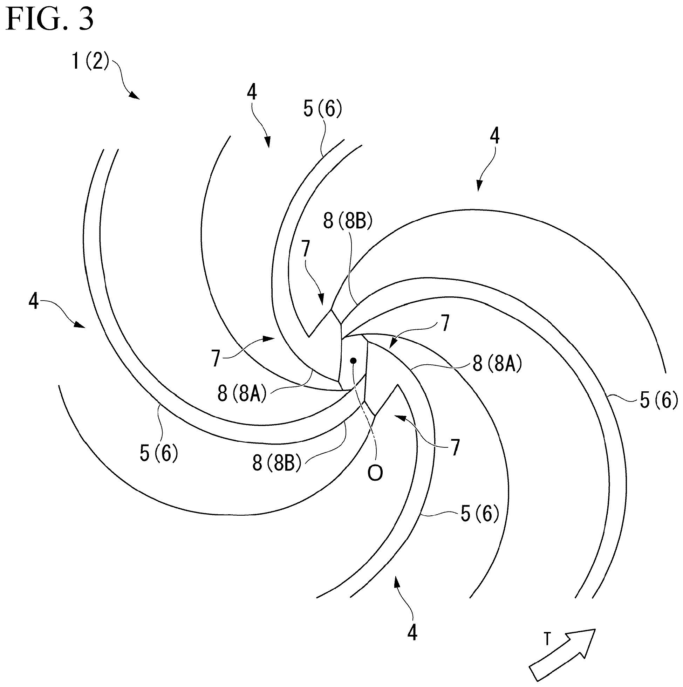

In the present embodiment, as illustrated in Fig. 3, the plurality of end cutting edges 8 include long end cutting edges 8A and short end cutting edges 8B which are alternately located in the circumferential direction when viewed from the leading end side in a direction of the axis O. The long end cutting edge 8A extends beyond the axis O while drawing a convex curve which protrudes in the end mill rotation direction T from the leading end of the peripheral cutting edge 6. The short end cutting edge 8B extends without exceeding the axis O while drawing the convex curve which protrudes in the end mill rotation direction T from the leading end of the peripheral cutting edge 6. In the case of the present embodiment, two long end cutting edges 8A do not intersect with the axis O, and inner peripheral ends of the long end cutting edges 8A mutually pass in the radial direction with respect to the axis O.

As illustrated by chain lines in Fig. 1, a cross section of the peripheral cutting edge 6 along the axis O of the rotation locus around the axis O has a convex curved shape which protrudes toward the outer peripheral side of the end mill main body 1. The convex curve formed by the cross section of the rotation locus of the peripheral cutting edge 6 is a convex arc in the present embodiment, and gradually extends toward the inner peripheral side as the convex curve extends toward the leading end side of the end mill main body 1. A rotation locus of the end cutting edge 8 around the axis O is located on one convex hemispherical surface which is in contact with the leading end of the peripheral cutting edge 6 in the rotation locus of the peripheral cutting edge 6 and has a center on the axis O.

A diameter of the cutting edge 5, that is, a diameter of a circle formed by the cutting edge 5 around the axis O is maximum at a trailing end of the peripheral cutting edge 6. A curvature radius R of the convex curve formed by the cross section along the axis O of the rotation locus of the peripheral cutting edge 6 around the axis O is larger than 1/2 of an outer diameter D of the cutting edge 5 which is a maximum diameter of the cutting edge 5 and 3 times or less the outer diameter D. In the present embodiment, the curvature radius R of the convex curve is equal to the outer diameter D of the cutting edge 5.

The peripheral cutting edge 6 is twisted to a side opposite to the end mill rotation direction T toward the trailing end side of the end mill main body 1, and has a positive helix angle β as described above. The helix angle β of the peripheral cutting edge 6 is 20 degree or more, preferably 30 degree or more, and more preferably 40 degree or more. In the present embodiment, the radial rake angle α of the peripheral cutting edge 6 is a negative angle as described above. The radial rake angle α is -20 degree or more and 0 degree or less, and preferably -10 degree or more and -3 degree or less.

As illustrated in Fig. 4, a core thickness Dw of the blade portion 2 of the end mill main body 1 in a cross section orthogonal to the axis O of a portion where the peripheral cutting edge 6 is formed is a diameter of a core thickness circle U inscribed on a bottom surface of the chip discharge flute 4 facing the outer peripheral side of the end mill main body 1 in the cross section orthogonal to the axis O. The core thickness Dw is 70% or more and 85% or less of the diameter d of the peripheral cutting edge 6 in the same cross section. Further, a length L of the peripheral cutting edge 6 in the direction of the axis O is within a range of 0.75 times or more and 2 times or less the outer diameter D which is the maximum diameter of the cutting edge 5.

Further, the curvature radius R of the convex curve formed by the cross section along the axis O of the rotation locus of the peripheral cutting edge 6 around the axis O is within a range of 5 times or more and 20 times or less a curvature radius r of a convex curve (convex arc) formed by the cross section along the axis O of the rotation locus of the end cutting edge 8 around the axis O.

When the vertical wall of the die or the like having a small inclination angle with respect to the axis O is cut by the end mill having the above-described configuration, first, for example, contouring is performed by aligning a position of the blade portion 2 with an upper end portion of the vertical wall and feeding the end mill main body 1 in a direction perpendicular to the axis O. Next, the end mill main body 1 is moved at a predetermined pitch toward the leading end side in the direction of the axis O so that cutting surfaces by the blade portion 2 overlap each other, and the contouring is performed again. Thereafter, the vertical wall is cut by repeating the above-described contouring.

In the end mill having the above-described configuration, the cross section along the axis O of the rotation locus of the peripheral cutting edge 6 around the axis O has a convex curved shape which protrudes toward the outer peripheral side of the end mill main body 1, and the curvature radius R of the convex curve is larger than 1/2 of the outer diameter D of the cutting edge 5 which is the maximum diameter of the cutting edge 5. Therefore, compared to an end cutting edge in which a curvature radius (radius) is 1/2 of an outer diameter of a cutting edge like the end cutting edge of a ball end mill having a hemispherical rotation locus, if the outer diameters D of the cutting edges 5 are the same each other, it is possible to prevent a boundary portion between the cutting surfaces from largely protruding even when the movement pitch increases during the cutting of the vertical wall as described above.

In the end mill having the above configuration, the helix angle β of the peripheral cutting edge 6 is a positive angle of 20 degree or more, and the radial rake angle α of the peripheral cutting edge 6 is a negative angle of 0 degree or less. Therefore, the peripheral cutting edge 6 can have a high sharpness while securing edge strength, and thus, a cutting load can be reduced. Further, it is possible to obtain good machined surface roughness when the end mill main body 1 is moved at a small movement pitch in the direction of the axis O without increasing a size of the end mill main body 1. Accordingly, as described above, it is possible to efficiently perform finishing cutting or semi-finishing cutting of the vertical wall of the work material with high quality without increasing a rotational driving force of the end mill main body 1 and a cost.

Moreover, if the curvature radius R of the convex curve formed by the cross section of the rotation locus of the peripheral cutting edge 6 is too large, the peripheral cutting edge 6 bites the work material over a wide range in the direction of the axis O, a cutting resistance increases, and chatter vibrations are generated. Accordingly, there is a concern that the machined surface roughness may be rather impaired. For this reason, the curvature radius R of the convex curve formed by the rotation locus of the peripheral cutting edge 6 is 3 times or less the outer diameter D which is the maximum diameter of the cutting edge 5. Further, if the radial rake angle α of the peripheral cutting edge 6 is too small, similarly, there is a concern that the cutting resistance increases. Therefore, the radial rake angle α of the peripheral cutting edge 6 is set to -20 degree or more.

Furthermore, by setting the helix angle β of the peripheral cutting edge 6 to be 30 degree or more, or 40 degree or more, the peripheral cutting edge 6 has a higher sharpness, the cutting resistance can be further reduced, and the machined surface roughness can be improved. If the helix angle β of the peripheral cutting edge 6 is too large, rigidity of the peripheral cutting edge 6 is reduced and chipping is easily generated. Therefore, the helix angle β of the peripheral cutting edge 6 is preferably 60 degree or less, and more preferably 50 degree or less. Further, by setting the radial rake angle α of the peripheral cutting edge 6 to be -10 degree or more and -3 degree or less, it is possible to further reduce the cutting resistance and surely secure the edge strength.

Furthermore, in the present embodiment, the convex curve formed by the cross section of the rotation locus of the peripheral cutting edge 6 is formed so as to gradually extend toward the inner peripheral side of the end mill main body 1 as the convex curve extends toward the leading end side of the end mill main body 1. Therefore, when a vertical wall of a work material having a small inclination angle with respect to the axis O is cut by a triaxial machining device, by moving the end mill main body 1 along the inclination of the vertical wall at a predetermined pitch toward the leading end side in the direction of the axis O, it is possible to perform the cutting without interference between the end mill main body 1 and the vertical wall. Therefore, it is possible to cut the vertical wall without using a machining device which requires complicated control of four or more axes.

In addition, in the present embodiment, the core thickness Dw of the blade portion 2 of the end mill main body 1 in the cross section orthogonal to the axis O of the portion where the peripheral cutting edge 6 is formed is 70% or more and 85% or less of the diameter d of the peripheral cutting edge 6 in the same cross section. Therefore, a sufficient size (capacity) can be secured in the chip discharge flute 4, chips can be discharged well, and smooth cutting can be performed. Further, according to the above configuration, the rigidity of the end mill main body 1 in the blade portion 2 in which the peripheral cutting edge 6 is formed can be increased, and chattering and bending of the end mill main body 1 caused by the cutting resistance can be prevented, and thus, the machined surface roughness can be further improved.

Further, in the present embodiment, the length L of the peripheral cutting edge 6 in the direction of the axis O is within a range of 0.75 times or more and 2 times or less the outer diameter D of the cutting edge 5. Thereby, a machining width of the vertical wall in once contouring can be sufficiently secured and machining efficiency can be maintained. Further, even when a bottom surface of the work material perpendicular to the axis O or an inclined surface having a gentler inclination than the vertical wall is formed following the vertical wall on the leading end side in the direction of the axis O, the end mill main body 1 can be moved to a position very close to the bottom surface of the work material or the inclined surface, and the vertical wall can be cut by the triaxial machining device.

Further, in the present embodiment, the cutting edge 5 further has the convex curved end cutting edge 8 at the leading end portion of the end mill main body 1. In the convex curved end cutting edge 8, a cross section along the axis O of the rotation locus around the axis O has a center on the axis O. The convex curved end cutting edge 8 is in contact with the leading end of the convex curve formed by the cross section of the rotation locus of the peripheral cutting edge 6. For this reason, for example, when a bottom surface perpendicular to the axis O is formed following the vertical wall of the work material, it is possible to continuously perform cutting of a corner portion between the vertical wall and the bottom surface using the end cutting edge 8 by a triaxial machining device.

Moreover, when the end cutting edge 8 having a hemispherical rotation locus is formed at the leading end portion of the end mill main body 1, if the curvature radius R of the convex curve formed by the cross section of the rotation locus of the peripheral cutting edge 6 is too large with respect to the curvature radius (radius r) of the convex curve (convex arc) formed by the cross section of the rotation locus of the end cutting edge 8, the curvature radius r of the end cutting edge 8 is too small relatively, and thus, there is a concern that the end cutting edge 8 is damaged.

If the curvature radius R of the peripheral cutting edge 6 is relatively smaller than the curvature radius (radius r) of the end cutting edge 8, the curvature radii r and R of the end cutting edge 8 and the peripheral cutting edge 6 are substantially the same as each other, it is no different from cutting with a ball end mill. Therefore, when the end cutting edge 8 is formed at the leading end portion of the end mill main body 1 as in the present embodiment, it is desirable that the curvature radius R of the convex curve formed by the cross section of the rotation locus of the peripheral cutting edge 6 is within the range of 5 times or more and 20 times or less the curvature radius r of the convex curve formed by the cross section of the rotation locus of the end cutting edge 8.

In addition, in the present embodiment, the convex curve formed by the cross section along the axis O of the rotation locus of the peripheral cutting edge 6 around the axis O is a convex arc. However, the convex curve may be a convex curve such as an elliptic arc or a parabola. Further, in the present embodiment, the convex curve formed by the cross section of the rotation locus of the peripheral cutting edge 6 gradually extends toward the inner peripheral side as the convex curve extends toward the leading end side of the end mill main body 1. However, the convex curve may be formed so as to extend once toward the outer peripheral side and expand in diameter toward the leading end side of the end mill main body 1, and then gradually extend toward the inner peripheral side. In this case, the outer diameter D, which is the maximum diameter of the cutting edge 5, is an outer diameter at a position where the peripheral cutting edge 6 is most expanded.

### [Examples]

Next, examples of the present invention are be given to demonstrate effects of the curvature radius (hereinafter, referred to as an outer periphery R) of the convex curve formed by the cross section of the rotation locus of the peripheral cutting edge of the present invention, the radial rake angle of the peripheral cutting edge, and the helix angle of the peripheral cutting edge. In the examples, six types of end mills were manufactured based on the above embodiment, in which an outer diameter of a cutting edge was 10 mm, an outer periphery R was 10 mm which is equal to the outer diameter of the cutting edge, a helix angle of a peripheral cutting edge was 40 degree to 60 degree, and a radial rake angle of the peripheral cutting edge varied. Table 1 illustrates the outer diameter, the outer periphery R, the radial rake angle, and the helix angle in Examples 1 to 6.

Further, as Comparative Examples with respect to Examples 1 to 6, an end mill was manufactured in which an outer diameter of a cutting edge was 10 mm, an outer periphery R was 85 mm (8.5 times the outer diameter of the cutting edge), a radial rake angle of a peripheral cutting edge was -1.6 degree, and a helix angle was 20 degree, an end mill was manufactured in which an outer diameter of a cutting edge was 10 mm, an outer periphery R was 10 mm, a radial rake angle of a peripheral cutting edge was -2.5 degree, and a helix angle was 40 degree, an end mill was manufactured in which an outer diameter of a cutting edge was 10 mm, an outer periphery R was 10 mm, a radial rake angle of a peripheral cutting edge was -3.7 degree, and a helix angle was 20 degree, and an end mill was manufactured in which an outer diameter of a cutting edge was 10 mm, an outer periphery R was 5 mm (1/2 of the outer diameter of the cutting edge), a radial rake angle of a peripheral cutting edge was -5.3 degree, and a helix angle was 20 degree. These are illustrated in Table 1 as Comparative Examples 1, 2, 3, and 4 in order. Comparative Example 4 is a ball end mill.

Using the end mills of Examples 1 to 6 and Comparative Examples 1 to 4, a cutting test was performed by repeating contouring of feeding an end mill main body in a direction perpendicular to an axis of the end mill main body respect to a vertical wall of a work material at a predetermined pitch on a leading end side in an axial direction. Regarding a cutting surface (machining surface) of the work material, machined surface roughness (maximum height roughness Rz (µm) in JIS B 0601-2013) in a feed direction and the axial direction was measured. The results are also illustrated in Table 1.

In each of the end mills of Examples 1 to 6 and Comparative Examples 1 to 4, a base material of the end mill main body is a cemented carbide, and a surface of the blade portion is coated with a hard coating. Moreover, the work material is a material (hardness 43HRC) equivalent to SKD61 in JIS G 4404. For the cutting, contouring of a rotation speed: 8800 min⁻¹ (cutting speed of 276 m/min), a feeding speed: 2220 mm/min, and a machining allowance: 0.1 mm was repeated with respect to the vertical wall inclined at 60 degree to a horizontal surface at a pitch of 0.2 mm. In addition, an amount of protrusion of the end mill main body was 40 mm, a holder was a milling holder manufactured by Daishowa Seiki Co., Ltd., and wet machining was performed using a water-soluble cutting fluid.

**[Table 1]**

| | Outer diameter [mm] | Outer periphery R [mm] | Radial rake angle [degree] | Helix angle [degree] | Surface roughness Rz[µm] | |
|---|---|---|---|---|---|---|
| | | | | | Feed direction | Axial direction |
| Example 1 | 10 | 10 | -3.4 | 40 | 1.144 | 1.598 |
| Example 2 | 10 | 10 | -5.7 | 40 | 1.037 | 1.493 |
| Example 3 | 10 | 10 | -8.8 | 40 | 1.076 | 1.688 |
| Example 4 | 10 | 10 | -11.5 | 40 | 1.232 | 1.852 |
| Example 5 | 10 | 10 | -5.5 | 30 | 1.344 | 1.942 |
| Example 6 | 10 | 10 | -5.3 | 60 | 1.259 | 1.854 |
| Comparative Example 1 | 10 | 85 | -1.6 | 20 | 2.034 | 2.353 |
| Comparative Example 2 | 10 | 10 | 2.5 | 40 | 2.467 | 2.238 |
| Comparative Example 3 | 10 | 10 | -3.7 | 20 | 2.121 | 2.328 |
| Comparative Example 4 | 10 | 5 | -5.3 | 20 | 1.503 | 2.439 |

From the results of Table 1, first, in Comparative Example 1 in which the outer periphery R is as large as 8.5 times the outer diameter of the cutting edge, the peripheral cutting edge bit the work material over a wide range in the axial direction, and a cutting resistance increased, and chatter vibrations were generated. Therefore, in the end mill of Comparative Example 1, the machined surface roughness in both the feed direction and the axial direction exceeded 2.0 µm.

In the end mill of Comparative Example 2 in which the radial rake angle of the peripheral cutting edge was a positive angle, chatter vibrations are generated because the rake angle was too strong. As a result, the machined surface roughness exceeded 2.0 µm.

In the end mill of Comparative Example 3 in which the helix angle of the peripheral cutting edge was 20 degree, the helix angle was too weak, and thus, the cutting resistance increased and chatter vibrations are generated. As a result, the machined surface roughness exceeded 2.0 µm.

In Comparative Example 4 which is a ball end mill of which the outer periphery R is 1/2 of the outer diameter of the cutting edge, the machined surface roughness in the feed direction did not exceed 2.0 µm. However, a boundary portion between the cutting surfaces protruded when the end mill main body was moved in the axial direction to perform the contouring, and the machined surface roughness in the axial direction exceeded 2.0 µm.

With respect to Comparative Examples 1 to 4, in Examples 1 to 6 according to the present invention, chatter vibrations were not generated, and the machined surface roughness in both the feed direction and the axial direction was 2.0 µm or less. Particularly, in Examples 1 to 3 in which the radial rake angle of the peripheral cutting edge was -10 degree or more and -3 degree or less, the machined surface roughness in the feed direction was 1.2 µm or less and the machined surface roughness in the axial direction was It was 1.7 µm or less, and thus, further good surface roughness was obtained. In Examples 5 and 6 in which the helix angles of the peripheral cutting edge were 30 degree and 60 degree, respectively, the machined surface roughness was slightly larger than that of Examples 1 to 3, but the machined surface roughness in the feed direction and the axial direction was 2.0 µm or less.

### [Reference Signs List]

1 End mill main body
2 Blade portion
3 Shank portion
4 Chip discharge flute
5 Cutting edge
6 Peripheral cutting edge
7 Gash
8 End cutting edge
10 End mill
O Axis of end mill main body
T End mill rotation direction
R Curvature radius of convex curve formed by cross section along axis O of rotation locus of peripheral cutting edge 6 around axis O
D Outer diameter of cutting edge 5
r Curvature radius of convex curve formed by cross section along axis O of rotation locus of end cutting edge 8 around axis O
Dw Core thickness
d Diameter of peripheral cutting edge 6
L Length of peripheral cutting edge 6 in direction of axis O
α Radial rake angle of peripheral cutting edge 6
β Helix angle of peripheral cutting edge 6

## Claims

1. An end mill comprising:
a shaft-shaped end mill main body which is rotated around an axis in an end mill rotation direction;
a chip discharge flute which is formed on an outer periphery of a leading end portion of the end mill main body and extends from a leading end side to a trailing end side of the end mill main body; and
a cutting edge which has a peripheral cutting edge formed on the outer peripheral ridge portion of a wall surface of the chip discharge flute facing the end mill rotation direction,
wherein in the peripheral cutting edge, a cross section along the axis of a rotation locus around the axis has a convex curved shape which protrudes toward an outer peripheral side of the end mill main body,
wherein a curvature radius of a convex curve formed by the cross section of the rotation locus of the peripheral cutting edge is set to be larger than 1/2 of an outer diameter of the cutting edge which is a maximum diameter of the cutting edge and 3 times or less the outer diameter,
wherein the peripheral cutting edge is twisted to a side opposite to the end mill rotation direction toward the trailing end side of the end mill main body, and a helix angle of the peripheral cutting edge is 40 degree or more, and
wherein a radial rake angle of the peripheral cutting edge is -20 degree or more and 0 degree or less.

2. The end mill according to claim 1,
wherein the radial rake angle of the peripheral cutting edge is -10 degree or more and -3 degree or less.

3. The end mill according to any one of claims 1 to 2,
wherein the convex curve formed by the cross section of the rotation locus of the peripheral cutting edge gradually extends toward an inner peripheral side as the convex curve extends toward the leading end side of the end mill main body.

4. The end mill according to any one of claims 1 to 3,
wherein a core thickness of the end mill main body in a cross section orthogonal to the axis of a portion where the peripheral cutting edge is formed is 70% or more and 85% or less of a diameter of the peripheral cutting edge in the same cross section.

5. The end mill according to any one of claims 1 to 4,
wherein a length of the peripheral cutting edge in an axial direction is within a range of 0.75 times or more and 2 times or less the outer diameter.

6. The end mill according to any one of claims 1 to 5,
wherein the cutting edge further includes an end cutting edge in which the cross section along the axis of the rotation locus around the axis has a center on the axis and which forms a convex curved shape being in contact with a leading end of the convex curve formed by the cross section of the rotation locus of the peripheral cutting edge, on the leading end portion of the end mill main body, and
wherein the curvature radius of the convex curve formed by the cross section of the rotation locus of the peripheral cutting edge is within a range of 5 times or more and 20 times or less a curvature radius of a convex curve formed by the cross section of the rotation locus of the end cutting edge.

## Patentansprüche

1. Schaftfräser, umfassend:
einen schaftförmigen Schaftfräserhauptkörper, der um eine Achse in einer Schaftfräserdrehrichtung gedreht ist;
eine Spanabfuhrnut, die an einem Außenumfang eines vorderen Endabschnitts des Schaftfräserhauptkörpers gebildet ist und sich von einer vorderen Endseite zu einer hinteren Endseite des Schaftfräserhauptkörpers erstreckt; und
eine Schneidkante, die eine auf dem außenumfangsseitigen Gratabschnitt einer der Schaftfräserdrehrichtung zugewandten Wandoberfläche der Spanabfuhrnut gebildete Umfangsschneidkante aufweist,
wobei in der Umfangsschneidkante ein Querschnitt entlang der Achse einer Rotationsbahn um die Achse eine konvex gekrümmte Form aufweist, die zu einer Außenumfangseite des Schaftfräserhauptkörpers vorsteht,
wobei ein Krümmungsradius einer konvexen Krümmung, die durch den Querschnitt der Rotationsbahn der Umfangsschneidkante gebildet ist, auf einen Wert eingestellt ist, der größer als 1/2 eines Außendurchmessers der Schneidkante ist, der ein Maximaldurchmesser der Schneidkante ist, und 3-mal oder weniger des Außendurchmessers ist,
wobei die Umfangsschneidkante zu einer der Schaftfräserdrehrichtung entgegengesetzten Seite zur hinteren Endseite des Schaftfräserhauptkörpers hin verdreht ist, und ein Schrägungswinkel der Umfangsschneidkante 40 Grad oder mehr beträgt, und
wobei ein radialer Spanwinkel der Umfangsschneidkante -20 Grad oder mehr und 0 Grad oder weniger beträgt.

2. Schaftfräser nach Anspruch 1,
wobei ein radialer Spanwinkel der Umfangsschneidkante -10 Grad oder mehr und - 3 Grad oder weniger beträgt.

3. Schaftfräser nach einem der Ansprüche 1 bis 2,
wobei sich die konvexe Krümmung, die durch den Querschnitt der Rotationsbahn der Umfangsschneidkante gebildet ist, schrittweise zu einer Innenumfangseite hin erstreckt, während sich die konvexe Krümmung zu der vorderen Endseite des Schaftfräserhauptkörpers hin erstreckt.

4. Schaftfräser nach einem der Ansprüche 1 bis 3,
wobei eine Kerndicke des Schaftfräserhauptkörpers in einem Querschnitt, der orthogonal zu der Achse eines Abschnitts ist, in dem die Umfangsschneidkante gebildet ist, 70 % oder mehr und 85 % oder weniger eines Durchmessers der Umfangsschneidkante in demselben Querschnitt beträgt.

5. Schaftfräser nach einem der Ansprüche 1 bis 4,
wobei eine Länge der Umfangsschneidkante in einer axialen Richtung innerhalb eines Bereichs von 0,75-mal oder mehr und 2-mal oder weniger des Außendurchmessers liegt.

6. Schaftfräser nach einem der Ansprüche 1 bis 5,
wobei die Schneidkante weiter eine Endschneidkante einschließt, in der der Querschnitt entlang der Achse der Rotationsbahn um die Achse ein Zentrum auf der Achse aufweist und die eine konvex gekrümmte Form bildet, die mit einem vorderen Ende der konvexen Krümmung, die durch den Querschnitt der Rotationsbahn der Umfangsschneidkante gebildet wird, auf dem vorderen Endabschnitt des Schaftfräserhauptkörpers in Kontakt steht, und
wobei der Krümmungsradius der konvexen Krümmung, die durch den Querschnitt der Rotationsbahn der Umfangsschneidkante gebildet wird, innerhalb eines Bereichs von 5-mal oder mehr und 20-mal oder weniger eines Krümmungsradius einer konvexen Krümmung, die durch den Querschnitt der Rotationsbahn der Stirnschneidkante gebildet ist, liegt.

## Revendications

1. Fraise à queue à rainurer comprenant :
un corps principal de la fraise à queue à rainurer, en forme d'arbre, qui est mis en rotation autour d'un axe dans un sens de rotation de la fraise à queue à rainurer ;
une goujure d'évacuation des copeaux, qui est formée sur une périphérie externe d'une portion d'extrémité avant du corps principal de la fraise à queue à rainurer et qui s'étend depuis un côté d'extrémité avant jusqu'à un côté d'extrémité arrière du corps principal de la fraise à queue à rainurer ; et
une arête de coupe, qui présente une arête de coupe périphérique formée sur la portion de crête périphérique externe d'une surface de paroi de la goujure d'évacuation des copeaux faisant face au sens de rotation de la fraise à queue à rainurer,
dans laquelle, dans l'arête de coupe périphérique, une section transversale le long de l'axe d'un locus de rotation autour de l'axe présente une forme courbe convexe qui fait saillie vers un côté de périphérie externe du corps principal de la fraise à queue à rainurer,
dans laquelle un rayon de courbure d'une courbe convexe formée par la section transversale du locus de rotation de l'arête de coupe périphérique est défini de manière à être plus grand que 1/2 d'un diamètre extérieur de l'arête de coupe qui est un diamètre maximal de l'arête de coupe et est défini de manière à être 3 fois le diamètre extérieur de l'arête de coupe ou moins,
dans laquelle l'arête de coupe périphérique est vrillée vers un côté opposé au sens de rotation de la fraise à queue à rainurer vers le côté d'extrémité arrière du corps principal de la fraise à queue à rainurer, et un angle d'hélice de l'arête de coupe périphérique est de 40 degrés ou plus, et
dans laquelle un angle de dépouille radial de l'arête de coupe périphérique est de -20 degrés ou plus et de 0 degré ou moins.

2. Fraise à queue à rainurer selon la revendication 1,
dans laquelle l'angle de dépouille radial de l'arête de coupe périphérique est de -10 degrés ou plus et de -3 degrés ou moins.

3. Fraise à queue à rainurer selon l'une quelconque des revendications 1 à 2,
dans laquelle la courbe convexe formée par la section transversale du locus de rotation de l'arête de coupe périphérique s'étend progressivement vers un côté de périphérie interne à mesure que la courbe convexe s'étend vers le côté d'extrémité avant du corps principal de la fraise à queue à rainurer.

4. Fraise à queue à rainurer selon l'une quelconque des revendications 1 à 3,
dans laquelle une épaisseur d'âme du corps principal de la fraise à queue à rainurer dans une section transversale orthogonale à l'axe d'une portion dans laquelle l'arête de coupe périphérique est formée est de 70 % ou plus et de 85 % ou moins d'un diamètre de l'arête de coupe périphérique dans la même section transversale.

5. Fraise à queue à rainurer selon l'une quelconque des revendications 1 à 4,
dans laquelle une longueur de l'arête de coupe périphérique dans une direction axiale est situé dans une gamme allant de 0,75 fois le diamètre extérieur ou plus à 2 fois le diamètre extérieur ou moins.

6. Fraise à queue à rainurer selon l'une quelconque des revendications 1 à 5,
dans laquelle l'arête de coupe inclut en outre une arête de coupe d'extrémité dans laquelle la section transversale le long de l'axe du locus de rotation autour de l'axe présente un centre sur l'axe et qui forme une forme courbe convexe en contact avec une extrémité avant de la courbe convexe formée par la section transversale du locus de rotation de l'arête de coupe périphérique, sur la portion d'extrémité avant du corps principal de la fraise à queue à rainurer, et
dans laquelle le rayon de courbure d'une courbe convexe formée par la section transversale du locus de rotation de l'arête de coupe périphérique se situe dans une gamme allant de 5 fois, ou plus de 5 fois, le rayon de courbure d'une courbe convexe formée par la section transversale du locus de rotation de l'arête de coupe d'extrémité et de 20 fois, ou moins de 20 fois, le rayon de courbure d'une courbe convexe formée par la section transversale du locus de rotation de l'arête de coupe d'extrémité.
